# EUROPEAN PATENT APPLICATION

(11) **EP 1 521 458 A1**
(43) Date of publication of application: **06.04.2005**
(21) Application number: 04255608.4
(22) Date of filing: 16.09.2004
(51) Int. Cl.: H04N 5/265, H04N 5/275, G09G 5/397

(54) **Image mixing method, and mixed image data generation device**

(30) Priority: 30.09.2003 JP 2003339212
(71) Applicant: SONY CORPORATION, Tokyo 141 (JP); Sony Computer Entertainment Inc., Tokyo 107-0062 (JP)
(72) Inventor: Sugimura, Akihiro, c/o Sony Computer Ent. Inc., Tokyo (JP)
(74) Representative: Turner, James Arthur

(57) **Abstract**

To mix first and second digital image data at a ratio defined by pixel-unit mixing-ratio information, mixing-ratio information is embedded, in each of pixel data formed from a plurality of bits in the first digital image data, as information of more than one bit in the pixel data. The mixing-ratio information is extracted from the first digital image data. The first and second digital image data are mixed at the ratio defined by the extracted mixing-ratio information. Thus, images can be mixed together with the α blending technique without having to use any special memory such as the α memory.

## Description

This invention relates to image mixing methods and to mixed image data generation devices.

It is well known to mix images for displaying them with an image formed from one of the image data being superposed in a translucent state on an image formed from the other of the image data. This method of image mixing is called "alpha (α) blending" technique with which two image data can be mixed or blended at a specified ratio of mixing and displayed with an image formed from one of them being superposed on an image formed from the other at a degree of translucency depending upon the specified ratio of mixing.

For controlling the degree of translucency elaborately pixel by pixel with the α blending, it is possible to use an alpha (α) data buffer memory which stores data mixed at a ratio α (0 ≤ α ≤ 1.0) for all pixels in one screen (one frame), for example.

In this case, mixed image data is generated by reading, for pixel data Da and Db in pixel positions of two image data on the display screen, the mixing ratio α of the data in corresponding pixel positions in the alpha (α) data buffer memory and calculating a value Da × α + Db × (1 - α).

With this technique, however, since the alpha (α) data buffer memory should have a capacity for one screen and it is necessary to use an increased number of bits of the ratio α for a more elaborate setting of the mixing ratio α in units of a pixel, so there is required a larger-capacity α data buffer memory.

There has been proposed a technique in which a mixing-ratio table memory which stores data mixed at a plurality of ratios α as table information is used to reduce the memory capacity even with the increased number of bits mixed at the ratio α as disclosed in a patent document 1 (Japanese Patent Application Laid-Open No. H07-282269).

FIG. 1 explains the technique disclosed in the patent document 1. Specifically, a first data is stored in a first image data buffer memory 1 while second image data is stored in a second image data buffer memory 2. The first and second image data are color image data whose pixel data are data on three primary colors, red, blue and green. Each primary-color data is of 8 bits, and pixel data is of 24 bits.

In this embodiment, there is provided a mixing-ratio table memory 3 having a maximum capacity of 256 data mixed at the 8-bit ratio α.

In this embodiment, information for acquiring the 8-bit mixing ratio α for each of pixels per screen from the mixing-ratio table memory (will be referred to as "α entry data" hereunder) 3 is written to an alpha (α) entry data buffer memory 4. The α entry data is equal to address information in the mixing-ratio table memory 3, and a mixing ratio set per pixel will be read from the mixing-ratio table memory 3 by setting the α entry data to address information having data mixed at a desired ratio α written therein. The α entry data buffer memory 4 is a frame memory holding the α entry data on all pixels of one frame.

Pixel data in the same pixel positions on a display screen are read synchronously with each other from the first and second image data buffer memories 1 and 2, and α entry data in corresponding positions are read synchronously with each other from the α entry data buffer memory 4.

The pixel data from the first and second image data buffer memories 1 and 2 are supplied to multiplication circuits 6 and 7 in a video mixer 5. Also, the α entry data in the corresponding pixel positions are supplied from the α entry data buffer memory 4 to the mixing-ratio table memory 3 and the data mixed at a ratio α set in the pixel positions are read from the mixing-ratio table memory 3.

The data mixed at the ratio α read from the mixing-ratio table memory 3 are supplied to the multiplication circuit 6, and to a (1 - α) calculation circuit 8 where it will provide (1 - α) data. This data is supplied to the multiplication circuit 7. Then, output data from the multiplication circuits 6 and 7 are mixed in a mixing circuit 9 which will provide mixed output data. The mixed output data is converted into display image data, for example, and supplied to a monitor display.

Thus, on the display screen of the monitor display, an image formed from the second image data, for example, is displayed being mixed in a translucent state corresponding to the mixing ratio α per pixel on an image formed from the first image data.

However, the image mixing method disclosed in the patent document 1 has a problem that it needs an α entry data buffer memory (for one frame) in addition to the image data buffer memory.

Various respective aspects and features of the invention are defined in the appended claims. Features from the dependent claims may be combined with features of the independent claims as appropriate and not merely as explicitly set out in the claims.

Embodiments of the present invention relate to a method of mixing a plurality of or two images data with an image formed from one of the image data being superposed in a translucent state on an image formed by the other of the image data, and a mixed image data generating device.

Embodiments of the present invention can overcome or at least alleviate the above-mentioned drawbacks of the related art by allowing an image mixing with the α blending technique even without any special memory such as the α data buffer memory and α entry data buffer memory.

Embodiments of the invention can provide an image mixing method of mixing first digital image data and second digital image data at a ratio defined in units of a pixel by mixing-ratio information, the method including the steps of:
embedding, in each of pixel data formed from a plurality of bits in the first digital image data, the mixing-ratio information as information of more than one bit in the pixel data;
separating the mixing-ratio information from the first digital image data; and
mixing the first and second digital image data at a ratio defined by the separated mixing-ratio information.

In the above techniques, the mixing-ratio information is embedded, for transmission, as a part of bits in the first digital image data. For mixing the first and second digital image data, the mixing-ratio information is separated from the first digital image data, and the first and second digital image data are mixed at the ratio defined by the separated mixing-ratio information.

Also embodiments of the invention can provide a method of mixing first and second digital image data at a ratio defined in units of a pixel by mixing-ratio information read from a mixing-ratio table memory having a plurality of mixing-ratio information stored therein, the method including the steps of:
embedding, in each of pixel data formed from a plurality of bits in the first digital image data, mixing-ratio selection data for selectively reading the mixing-ratio information from the mixing-ratio table memory as information of more than one bit in the pixel data;
separating the mixing-ratio selection data from the first digital image data;
reading the mixing-ratio information from the mixing-ratio table memory on the basis of the separated mixing-ratio information and in units of a pixel; and
mixing the first and second digital image data at the ratio defined by the read mixing-ratio information.

In the above techniques, the mixing-ratio selection data for selectively reading the mixing-ratio information from the mixing-ratio table memory is embedded, for transmission, as a part of bits in the first digital image data. For mixing the first and second digital image data, the mixing-ratio selection data is separated from the first digital image data, and the first and second digital image data are mixed at the ratio defined by the mixing-ratio information read from the mixing-ratio table memory on the basis of the separated mixing-ratio selection data.

According to the present invention, images can be mixed with the α blending technique without having to use any special memory such as the α data buffer memory or α entry data buffer memory.

The invention will now be described by way of example with reference to the accompanying drawings, throughout which like parts are referred to by like references, and in which:
FIG. 1 explains the conventional method of mixing images;
FIG. 2 is a schematic block diagram of the substantial part of an embodiment of the present invention;
FIG. 3 schematically illustrates a constructional example of the substantial part of the multimedia recorder/player including the present invention;
FIG. 4 is a schematic block diagram showing a constructional example of the embodiment of the present invention;
FIG. 5 shows an example of the display screen in the embodiment of the present invention;
FIG. 6 explains the operation of the embodiment of the present invention;
FIG. 7 is a functional block diagram for explanation of another constructional example of the substantial part of the embodiment of the present invention; and
FIG. 8 explains the operation of the embodiment of the present invention.

The present invention will be described in detail concerning embodiments of the method of mixing images and display image data generator according to the present invention with reference to the accompanying drawings.

In the embodiments which will be illustrated and described below, the present invention is applied to a multimedia recorder/player having the function of the video game machine, TV broadcast receiving and recording function and capable of recording data to and/or reproducing data from to a DVD (digital versatile disk).

Note that in the following description, the "content" means information the human can recognize visually and aurally, such as audio data such as music, images such as moving and still pictures, text data such as electronic novels, game programs or the like.

Also, the "medium" means an information storage medium such as a hard disk, optical disk, memory card, magnetic tape or the like, and an information transmission medium such as wave, cable or the like. However, a storage medium such as a game program medium or a transmission medium, of which the data format and compression format are different from the "medium" is differentiated from the "medium".

### < Construction of multimedia recording/playback system >

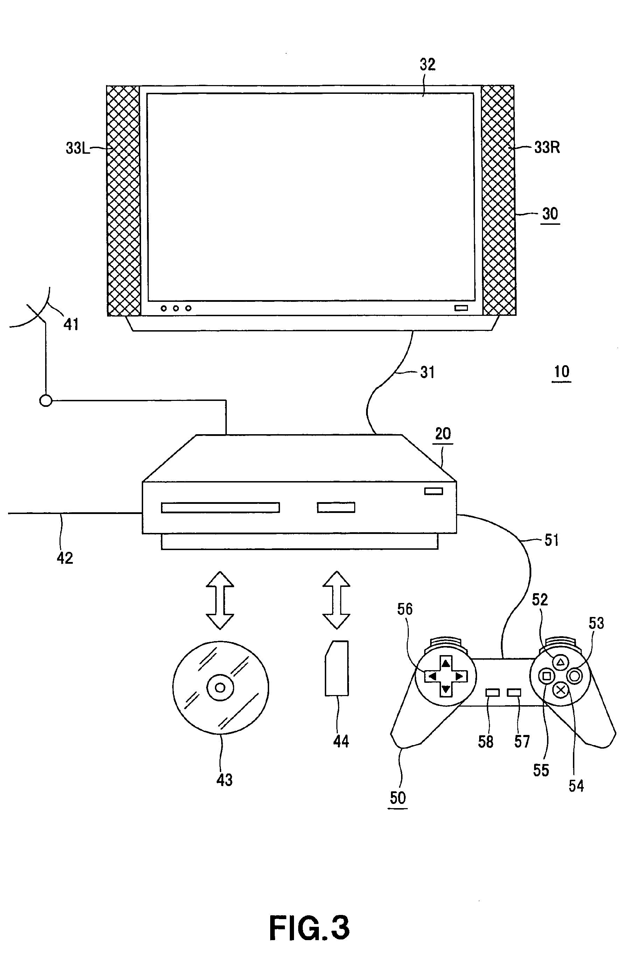

Referring now to FIG. 3, there is schematically illustrated the basic construction of a multimedia recording/playback system. As shown, the multimedia recording/playback system, generally indicated with a reference 10, includes a multimedia recorder/player 20 to which the present invention is applied.

In this embodiment, the multimedia recorder/player 20 does not includes any display on which an image and graphical user interface screen are displayed but includes a video output terminal (not shown) instead. The video output terminal is connected to a monitor display 30 which is a CRT (cathode-ray tube) or LCD (liquid crystal display), for example, by a video output terminal connecting cable 31 of the multimedia recorder/player 20, and the monitor display 30 has a screen 32 which displays an image and user interface screen.

Note that in the embodiment in FIG. 3, the monitor display 30 has speakers 33L and 33R provided at the opposite ends, left and right, thereof, and it is supplied with an audio signal from an audio output terminal (not shown) of the multimedia recorder/player 20 via a cable (not shown) and reproduce the audio signal acoustically.

The multimedia recorder/player 20 is supplied with content information via various types of media such as broadcasting, Internet, optical disk such as DVD, CD (compact disk) or the like, memory card, etc.

The broadcasting medium will be described below. In this embodiment, a TV broadcast reception antenna 41 is connected to the multimedia recorder/player 20 which will thus be supplied with a TV broadcast signal received by the reception antenna 41. Then, in the multimedia recorder/player 20, a broadcast program content selected by the user is extracted from the TV broadcast signal, decoded, and a broadcast program image thus formed is displayed on the screen of the monitor display 30 while a sound of the broadcast program is acoustically reproduced by the speakers 33L and 33R of the monitor display 30. Also, the multimedia recorder/player 20 has also a function to record the broadcast program content.

Next, the Internet medium will be described. The multimedia recorder/player 20 has connected thereto a communication line 42 which connects the multimedia recorder/player 20 to the Internet, and web content data downloaded via the Internet is supplied to the multimedia recorder/player 20. The web content data can be stored in the multimedia recorder/player 20 and also utilized with various functions such as a game program function provided in the multimedia recorder/player 20.

Further, the optical disk medium will be described. The multimedia recorder/player 20 has a function to read data in a content stored in an optical disk 43 such as DVD, CD or the like, decodes the data thus read and supplies the data to the monitor display 30 on which the data is displayed as an image and from which it is provided as a sound. Also, the multimedia recorder/player 20 has also a function to store moving picture data and audio data in the video content read from a DVD, and music content data read from a CD.

An optical disk can store contents including, for example, images, music and sound in a movie, music sounds such as classical music, popular songs and the like, electronic novel, etc. Data in an electronic novel as a content include text data, audio data for recitation, image data such as book illustrations, etc.

The memory card will be described. The multimedia recorder/player 20 has a function to read, and a function to write, data stored in a memory card 44. The memory card 44 can store content data including a captured image such as a moving picture or still picture captured by a digital camera, sound information incidental to the captured image, etc. These data can be stored in a data storage unit provided in the multimedia recorder/player 20.

In this embodiment, the multimedia recorder/player 20 has a video game function. The multimedia recorder/player 20 has connected thereto by an interconnecting cable 51 a command input unit (will be referred to as "remote commander" hereunder) 50 as a video game controller. According to this embodiment, since the remote commander 50 is intended primarily for use as the video game controller, so it has a relatively small number of control buttons. In the embodiment shown in FIG. 3, the remote commander 50 has four control buttons 52, 53, 54 and 55 provided at the respective apexes of an imaginary rhombus, cross-shaped button 56 having directional arrows, start button 57, select button 58, and an L-button 59L and R-button 59R provided at the lateral side of the remote commander 50.

### < Construction of multimedia recorder/player >

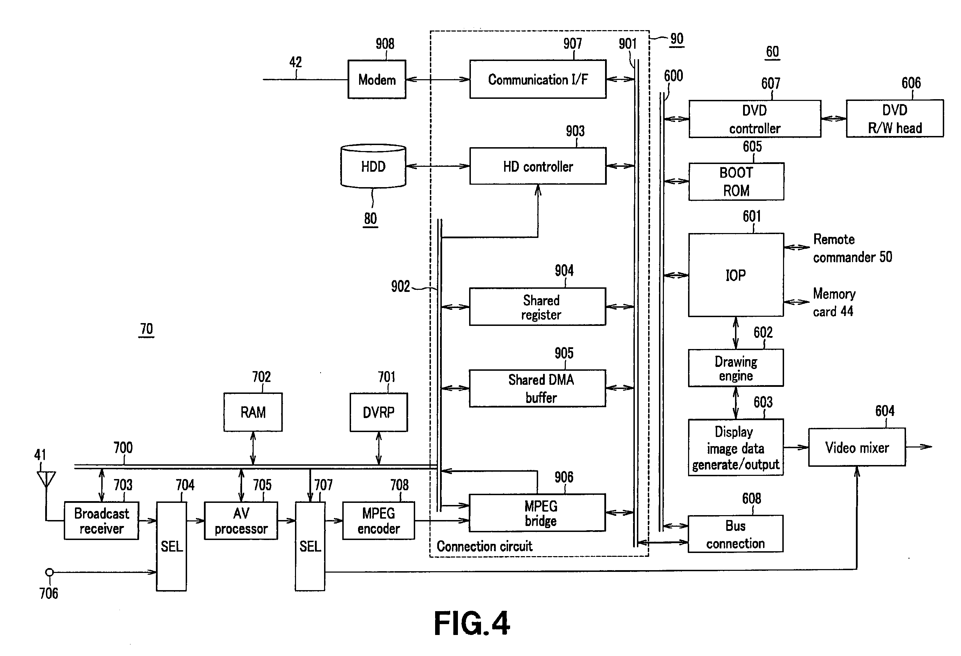

FIG. 4 shows the hardware construction of a substantial part of the multimedia recorder/player 20 as an example of the multisystem network according to this embodiment. It should be noted that in the example shown in FIG. 4, the audio signal system is omitted for the simplicity of the illustration and explanation.

As shown, the multimedia recorder/player 20 according to this embodiment includes a video game machine 60 as an example of the information processor, a TV broadcast recorder 70 as an example of the information recorder, a hard disk drive 80 as an example of the data storage unit, and an connection unit 90 for connection of the video game machine 60, TV broadcast recorder 70 and hard disk drive 80 to each other.

### [ Game machine 60 ]

In the multimedia recorder/player 20 according to this embodiment, the video game machine 60 is designed to have a generally similar hardware construction to that of the conventional video game machines with a priority given to the reusability of the existent video game machines. Also, an input/output interface between the DVD driver and memory card 44, remote commander 50 and a remote-control signal receiver are provided in the video game machine 60. It should be noted that the remote-control signal receiver is not shown in FIG. 4.

In the video game machine 60, there is provided a bus 600 having connected thereto a processor (will be referred to as "IOP" hereunder) 601 forming a microcomputer, a boot ROM (read-only memory) 605, and a DVD controller 607.

As shown, the DVD controller 607 has a DVD read/write head 606 connected thereto. To this multimedia recorder/player 20 according to this embodiment, there is provided a game program as a DVD having the game program recorded therein. The boot ROM 605 has written therein a program used to start up the game program. Also according to this embodiment, a DVD having a content such as a movie recorded therein can also be reproduced, and a TV broadcast program can be recorded to a recordable DVD.

A drawing engine 602 is connected to the IOP 601, and also an interface between the remote commander 50 and memory card 44 is also connected to the IOP 601.

The drawing engine 602 is used to generate drawing data such as a drawing command on the basis of the game program, drawing data for generating graphical user interface screen data corresponding to a command entered by the user by operating the remote commander 50, etc. The drawing engine 602 has also a function to decode image data recorded in a DVD and having been compressed by coding according to the MPEG (Moving Picture Experts Group) and image data recorded in the hard disk drive 80 and having been compressed by coding according to the MPEG. The drawing engine 602 is also a CPU to run an application.

The drawing date generated by the drawing engine 602 on the basis of the game program is supplied to a display image generation/output unit 603. The display image generation/output unit 603 generates display image data for display on the monitor display 30 on the basis of the drawing data or the like. The display image data from the generation/output unit 603 is send to the monitor display 30 via a video mixer 604 and display signal conversion output unit 609.

Also, in case the DVD has no game program recorded therein but has a movie content or the like recorded therein, the drawing engine 602 decodes the movie content data having been compressed by coding under the control of the IOP 601, the decoded data is formed by the display image generation/output unit 603 into to-be-replayed image data on the moving content, and the to-be-replayed data is supplied to the monitor display 30 via the video mixer 604 and display signal conversion output unit 609.

Also, the drawing data intended for use by the drawing engine 602 to generate a graphical user interface screen in response to a control command from the IOP 601 is sent to the video mixer 604 via the display image generation/output unit 603. The video mixer 604 will mix the drawing data into image data such as TV broadcast program or the like from the TV broadcast receiver 70 by α blending, and thus a graphical user interface screen is displayed in a translucent state on the display screen of the monitor display 30 as will be described in detail later.

The IOP 601 has also a function to judge the command entered by the user operating the remote commander 50 via the graphical user interface, and transfer it to the TV broadcast recorder 70 via the connection circuit 90 when an operation corresponding to the user's command relates to the TV broadcast recorder 70.

The IOP 601 has additionally a function to record the TV broadcast program content to a DVD as will be described in detail later.

There is provided a bus connection unit 608 which connects a bus 901 of the connection circuit 90, which will further be described later, and the bus 600 of the video game machine 60 to each other. The bus connection unit 608 provides a so-called fire wall to prevent illegal access by the connection circuit 90 to the video game machine 60.

### [ TV broadcast recorder 70 ]

As shown, the TV broadcast recorder 70 has provided therein a bus 700 to which there are connected the processor (will be referred to as "DVRP" hereunder) 701 forming a microcomputer and a work RAM 702.

The TV broadcast recorder 70 has provided therein a TV broadcast receiver 703 which selects, from TV signals received at the reception antenna 41, a broadcast program corresponding to a user's channel selection entered via an infrared remote commander (not shown), and sends it to an AV (audio visual) processor 705 via a selection circuit 704. It should be noted that an infrared remote-control signal is received by the video game machine 60, transferred to the bus 700 via the connection circuit 90 (shared register 908) and processed by the DVRP 701 for control of the channel selection and AV signal.

Video and audio signals from an external input terminal 706 are supplied to the AV processor 705 via the selection circuit 704. The selection circuit 704 is switched by graphical user interface displayed on the display screen of the monitor display 30 at the video game machine 60 correspondingly to a selection made via the remote commander 50. Information on the selection supplied via the remote commander 50 and detected by the IPO 601 is transferred to the bus 700 via the shared register 908 in the connection circuit 90 and received by the DVRP 701 where it will be processed.

The AV processor 705 reproduces video and audio signals of a TV broadcast program content. The reproduced video and audio signals are supplied to a selection circuit 707. When the selection circuit 707 is controlled by the DVRP 701 to select a TV broadcast program content for recording, the video and audio signals are supplied to a MPEG (Moving Picture Experts Group) encoder 708.

The MPEG encoder 708 compresses the video and audio signals by coding, supplies the coding-compressed data via the connection circuit 90 and records the data to the hard disk drive 80 under the control of the DVRP 701 to a DVD under the control of the IOP 601.

Also, when viewing or listening to a TV broadcast program content or a video and audio data content supplied via the external input terminal without recording, the video data from the selection circuit 707 is supplied to the monitor display 30 via the video mixer 604.

### [ Connection circuit 90 ]

Next, the connection circuit 90 will be illustrated and explained in detail. The connection circuit 90 is provided to allow both the IOP 601 of the video game machine 60 and the DVRP 701 of the TV broadcast recorder 70 to access the hard disk drive 80 as well as to transfer a command entered by the user and accepted by the video game machine 60 from the latter to the TV broadcast recorder70.

Note that according to this embodiment, the TV broadcast recorder 70 can have a preferential access to the hard disk drive 80 as having been described above. That is, priority is given to recording and reproduction of a TV broadcast program content.

Also, the data storage area of the hard disk drive 80 is divided into some subdivisional areas such as a data recording area DV for video and audio data of a TV broadcast program content or the like from the TV broadcast recorder 70, and a data recording area IO for the video game machine 60.

According to this embodiment, access by the IOP 601 to the hard disk drive 80 is basically intended for reading data from, or writing data to, the data recording area IO. Also, for recording or reproducing video and audio data of a TV broadcast program or the like, the DVRP 701 will access the data recording area DV of the hard disk drive 80.

The connection circuit 90 includes a bus 901 connected to the bus 600 of the video game machine 60 via a bus connection unit 608 and a bus 902 connected to the bus 700 of the TV broadcast recorder 70, and has additionally provided therein a had disk controller 903, shared register 904, shared DMA buffer 905 and an MPEG bridge 906. The hard disk controller 903, shared register 904 and shared DMA buffer 905 can be accessible by the IOP 601 from the bus 901 and also by the DVRP 701 from the bus 902.

The MPEG bridge 906 is controlled with a selection control signal from the DVRP 701 to transfer compressed data in a TV broadcast program content from the MPEG encoder 708 to either of the bus 901 or 902.

Further, the bus 901 has a modem 908 connected thereto via a communication interface 907, for example. The modem 908 is connected to the telephone (communication) line 42.

For access to the hard disk drive 80, the DVRP 701 can have a direct access to the hard disk drive 80 via the hard disk controller 903. However, the IOP 601 cannot have any direct access to the hard disk drive 80 but it can access the hard disk drive 80 by writing a command to the IOP 601 or the like to a register provided in the hard disk controller 903 and causing the DVRP 701 to transfer the content of the register to the hard disk drive 80.

The shared register 908 and shared DMA buffer 909 are used in common by the IOP 601 and DVRP 701. For example, the shared register 908 is used for the IOP 601 to send, to the DVRP 701, a command corresponding to a user's input via the graphical user interface or a command corresponding to a remote control signal supplied from the remote commander (not shown).

### [ Operation theory ]

The major operations of the multimedia recorder/player 20 constructed as having been described above will be described.

### [ Data reproduction for viewing, and listening to, broadcast program content or externally-supplied content ]

For example, when the user operating the remote commander 50 enters a command for selection of viewing and listening to a TV broadcast program content via the graphical user interface screen displayed on the display screen of the monitor display 30, the IOP 601 will detect it and pass a channel-select command to the DVRP 701 via the shared register 904.

The DVRP 701 will control the broadcast receiver 702 to select a TV broadcast program content corresponding to the channel-select command and the selection circuit 704 to select the TV broadcast program content. Then, the DVRP 701 will control the selection circuit 707 to select the video mixer 604 to supply video data in the TV broadcast program content to the monitor display 30 via the video mixer 604. Thus, the user can view and listen to the TV broadcast program on the monitor display 30.

Also, when the user operating the remote commander 50 enters, on the graphical user interface displayed on the display screen of the monitor display 30, a command for selection of an external content supplied via the external input terminal 706, the DVRP 701 having received the command from the IOP 601 via the shared register 904 will switch the selection circuit 704 to the external input terminal 706. Thus, the video mixer 604 is supplied with video data in the external content supplied from the selection circuit 707 via the external input terminal 706 and the external content can be viewed or listened to at the monitor display 30.

### [ Recording and reproduction of broadcast program content ]

For example, when the user operating the remote commander 50 enters a command for recording data to the hard disk drive 80 or for reading data from the hard disk drive 80 is entered by the user operating the remote commander 50 via the graphical user interface displayed on the display screen of the monitor screen 30, the IOP 601 will detect it and pass the write or read command to the DVRP 701 via the shared register 904.

For recording a TV broadcast program content in response to the record command, the DVRP 701 will control the hard disk controller 903 to write coding-compressed data in the broadcast program content supplied from the MPEG encoder 708 from the MPEG bridge 906 to the hard disk drive 80.

Also, for reproducing a content written in the hard disk drive 80 in response to the reproduce command, the DVRP 701 will control the hard disk controller 803 to read encoding-compressed data from the hard disk drive 80. The coding-compressed data read from the hard disk drive 80 is transferred to the video game machine 60 via the shared DMA buffer 905.

At the video game machine 60, the IOP 601 decodes the content data and outputs it to the monitor display 30 via the drawing engine 602, display image data generation/output unit 603, video mixer 604 and display signal conversion output unit 609 where it will be reproduced.

Note that when the record command entered from the IOP 601 is for recording data to a DVD, the record command is sent to the DVRP 701 via the shared register 904, and the MPEG bridge 906 transfers the coding-compressed data in the broadcast program content to the video game machine 60 via the shared DMA buffer 909. The IOP 601 sends the supplied coding-compressed data in the broadcast program content to the DVD read/write head 606 via the DVD controller 607 for recording to the DVD.

### < Operation as video game machine >

When a command for selection of an external content supplied via the external input terminal 706 is entered by the user operating the remote commander 50 via the graphical user interface displayed on the display screen of the monitor screen 30, the IOP 601 will start up the boot ROM 605 and take in a game software via the DVD controller 607. Then, the IOP 601 will control the drawing engine 602 to generate drawing data which is based on the game software.

The game software-based drawing image data from the drawing engine 602 is supplied to the display image data generation/output unit 603. The display image data generation/output unit 603 converts the drawing image data into display image data for display on the monitor display 30. The display image data from the display image data generation/output unit 603 is sent to the monitor display 30 via the video mixer 604.

Also, when the command entered by the user is for reproduction of a movie content recorded in a DVD, the drawing engine 602 is controlled by the IOP 601 to provide data resulted from decoding of coding-compressed movie content data. The decoded data is taken as replay image data for the movie content in the display image data generation/output unit 603 and supplied to the monitor display 30 via the video mixer 604 and display signal conversion output unit 609.

### < Graphical user interface screen >

According to this embodiment, the aforementioned TV broadcast program content image, reproduced image from a DVD or an image read from the hard disk drive 80 will be displayed as it is without being mixed with any other image at the video mixer 604. When the select button 57, for example, on the remote commander 50 is operated, the graphical user interface screen image will be superposed in a translucent state on an image being displayed.

That is, when the select button 57 on the remote commander 50 is pressed while the TV broadcast program content image, reproduced image from a DVD or an image read from the hard disk drive 80 is being displayed on the display screen, the IOP 601 will send, to the drawing engine 602, a command for generation of a graphical user interface screen image.

In response to the command sent from the IOP 601, the drawing engine 602 will generate data for drawing a graphical user interface screen. The graphical user interface screen drawing data generated by the drawing engine 602 is supplied to the display image data generation/output unit 603 which will generate graphical user interface screen image data. The graphical user interface screen image data generated by the display image data generation/output unit 603 is sent to the video mixer 604. It is mixed with image data such as TV broadcast program or the like from the TV broadcast receiver 70 with the α blending technique, and a graphical user interface screen is displayed being superposed in a translucent state on a TV broadcast program image on the display screen of the monitor display 30, as will be described in detail later.

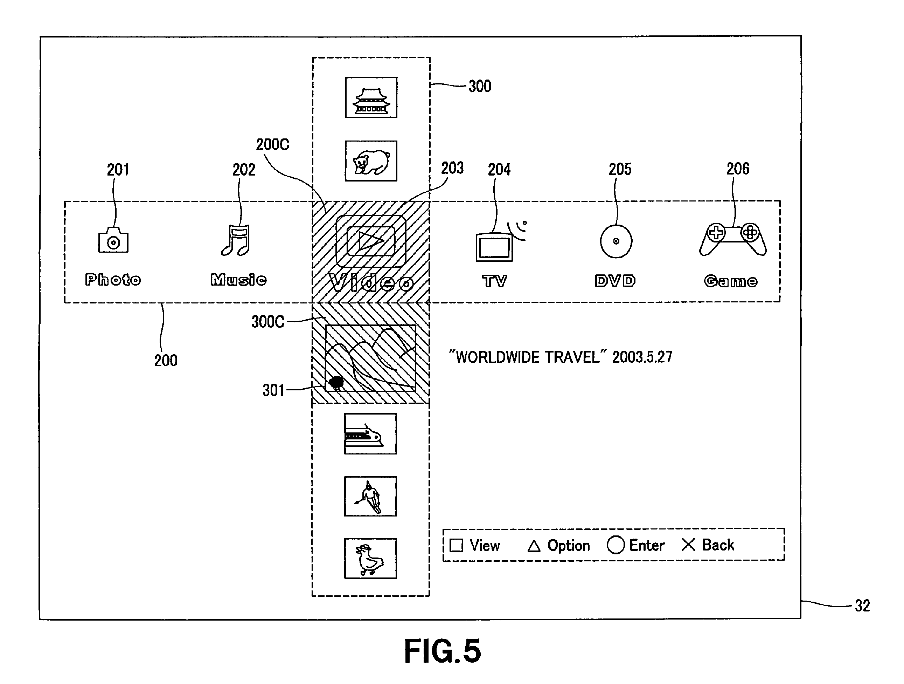

FIG. 5 shows an example of the initial menu screen for a graphical user interface screen generated by the drawing engine 602 under the control of the IOP 601 and displayed on the display screen 32 of the monitor display 30 in the multimedia player 20. This example of the initial menu screen in this embodiment is displayed and deleted alternately on the display screen 32 each time the start button 57, for example, on the remote commander 50 is pressed as having previously been described.

This example of the initial menu screen displays a two-dimensional array including a medium icon array 200 in which a plurality of medium icons is laid horizontally in a line and a content icon array 300 intersecting the medium icon array 200 nearly in the center of the display screen and in which a plurality of content icons is laid vertically in a line.

The medium icons included in the medium icon array 200 are miniature images for identification of types of media that can be replayed by the multimedia player 20 according to this embodiment. Thus, they are predetermined one. In the example shown in FIG. 5, the medium icons included in the array 200 include a photo icon 201, music icon 202, moving picture icon 203, broadcast icon 204, optical disk icon 205 and video game icon 206.

The content icons included in the content icon array 300 are miniature images for identification of a plurality of contents in a medium located in a position where the content icon array 300 and medium icon array 200 intersect each other (this medium will be referred to as "medium of interest" hereunder). Each of the content icons is formed from a thumbnail of-an image, letters, figure or the like as having previously been described. For example, the thumbnail is pre-generated by the IOP 601 and stored in the hard disk drive 80, and it is read by the IOP 601 from the hard disk drive 80 when it is to be used.

In the example shown in FIG. 5, the medium of interest is a medium indicated with the moving picture icon 203. The moving picture icon corresponds to the hard disk drive 80 as a medium. Therefore, the content icons included in the content icon array 300 are those recorded in the hard disk drive 80 in the example shown in FIG. 5. In this example, the content icon array 300 includes six content icons 301 to 306 displayed on one screen.

The graphical user interface screen is displayed being superposed in a translucent state over a video content image displayed on the display screen 32 as will further be described later.

In this example, the medium icon array 200 is not moved vertically but is displayed being fixed in a position slightly above the vertical center as shown in FIG. 5, for example. However, the plurality of medium icons in the medium icon array 200 is moved as a whole horizontally in response to a command for horizontal direction, entered by the user pressing the cross-shaped directional button 56 on the remote commander 50.

Similarly, the content icon array 300 is not also moved horizontally but is displayed being fixed in a position somewhat to the left from the horizontal center as shown in FIG. 5, for example. However, the plurality of content icons included in the content icon array 300 is moved as a whole vertically in response to a command for vertical direction, entered by the user pressing the cross-shaped directional button 56 on the remote commander 50.

As above, the medium icon array 200 in which the plurality of medium icons 201 to 206 is laid horizontally in a line is displayed against vertical movement while the content icon array 300 in which the plurality of content icons 301 to 306 is laid vertically in a line is displayed against horizontal movement. So, an area 200C where the medium icon array 200 and content icon array 300 intersect each other is fixed in a position to an obliquely upper left of the center of the display screen 32.

According to this embodiment, the IOP 601 recognizes the medium icon displayed in the intersectional area 200C as one, being selected (a medium icon of interest), of the plurality of medium icons included in the medium icon array 200.

In this embodiment, the medium icon of interest in the intersectional area 200C is displayed being emphasized in a different color from that of the other medium icons and larger size than that of the other medium icons and with a lower transparency than that of the other medium icons for differentiation from the other medium icons. In the example shown in FIG. 5, a moving picture icon 203 is displayed in the intersectional area 200C in a different color from that of the other medium icons and larger size than that of the other medium icons and with a lower transparency than that of the other medium icons as shown, which will help the user in readily knowing that the moving picture icon 203 is being selected.

Also according to this embodiment, the content controller 82 recognizes a content icon displayed in an area 300C (will be referred to as "area of interest" hereunder) beneath the intersectional area 200C as a content icon being selected (content icon of interest). In this example, the content icon of interest displayed in the area of interest 300C is also displayed in a larger size than that of the other content icons and with a lower transparency than that of the other content icons for differentiation from the other content icons.

As above, an icon displayed in the fixed intersectional area 200C is taken as a medium icon of interest and a content icons displayed in the area 300C of interest beneath the intersectional area 200C is taken as a content icon of interest. The user scrolls the medium icon array 200 horizontally to display a medium icon corresponding to a desired medium in the intersectional area 200C, and scrolls the content icon array 300 vertically to display a content icon corresponding to a desired content in the area of interest 300C, to thereby select a desired content in a desired medium.

When any medium icon is set in the intersectional area 200C, it is displayed in a different color and size from those of the other medium icons and with a different transparency from the other medium icons in order to emphasize the medium icon being selected for differentiation from the other medium icons. Since a medium icon in the intersectional area 200C is thus displayed in a different manner from that in which the other medium icons are displayed, the user will easily select a desired medium.

Then, when any medium icon is set in the intersectional area 200C, the content icon array 300 is displayed to spread vertically from the intersectional area 200C.

Next, the user moves the entire content icon array 300 vertically in response to a vertical direction command entered by the user operating the cross-shaped directional button 56 on the remote commander 50. Then, the content icon positioned in the area of interest 300C beneath the intersectional area 200C is displayed in a different color and size and with a different transparency. It should be noted that a movie title and date of recording are displayed as attributes of a content corresponding to the content icon of interest in a position near the content of interest, namely, to the right of the content icon of interest in the example shown in FIG. 5, for example.

### < Image mixing in the video mixer 604 >

### [ First embodiment of the image mixing method ]

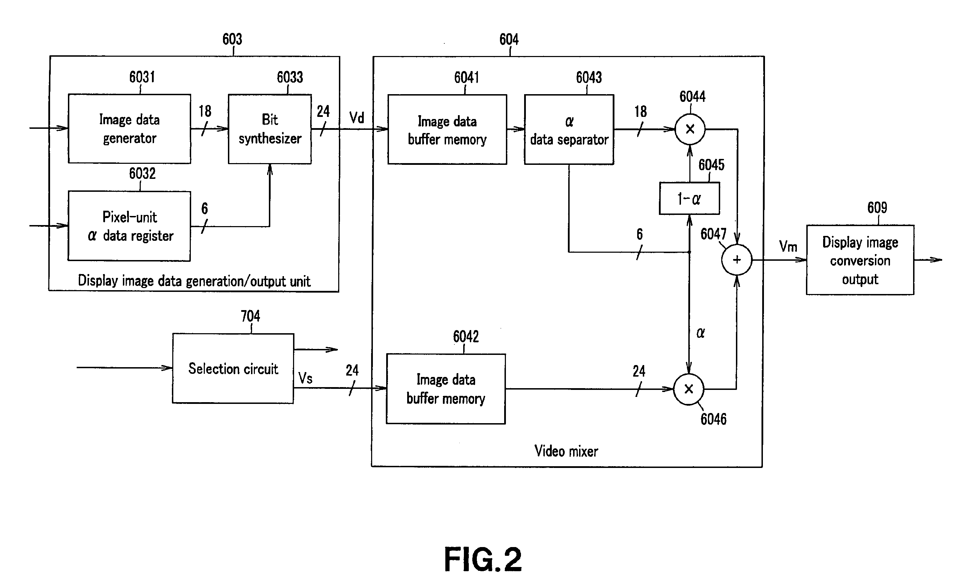

FIG. 2 explains the first embodiment of the image mixing method according to the present invention. Namely, FIG. 2 is a functional block diagram illustrating, as blocks, functional units which combine image data on the graphical user interface in the display image data generation/output unit 603 and video mixer 604 in the video game machine 60 and image data from the TV broadcast recorder 70.

According to the first embodiment, to generate image data of a graphical user interface, the display image data generation/output unit 603 includes an image data generator 6031 which generates image data on the basis of drawing data from the drawing engine 602, a pixel-unit α data register 6032 which generates data mixed at a pixel-unit ratio α (0 ≤ α ≤ 1.0) (will be referred to as "α data" hereunder), and a bit synthesizer 6033.

In case image data on a video game content not to be mixed with image data from the TV broadcast receiver 70 is generated or in case image data read from a DVD is generated, only an image data generator 6031 included in the display image data generation/output unit 603 works.

For processing image data other than image data to be processed for translucent appearance as the image data on the graphical user interface, the image data generator 6031 will generate pixel data of 24 bits in total including 8 bits of primary-color data such as red (R), green (G) and blue (B), in this example. Image data formed from pixel data of which one pixel is of 24 bits is supplied to the display signal conversion output unit 609 including a D-A converter via an image data buffer memory 6041 in the video mixer 604 for conversion into a display signal. The display signal from the display signal conversion output unit 609 is supplied to the monitor display 30.

On the other hand, for image data such as the graphical user interface screen image data to be processed for translucent appearance, the image data generator 6031 outputs pixel data each of 18 bits in total including three primary-color data each of 6 bits, such as red, green and blue, in this example.

The display image data generation/output unit 603 receives data mixed at the pixel-unit ratio α, namely, the α data, sent from the drawing engine 602, and supplies it to the pixel-unit α data register 6032. In this example, the α data is of 6 bits.

Then, the image data from the image data generator 6031 and α data from the pixel-unit α data register 6032 are supplied to the bit synthesizer 6033. The bit synthesizer 6033 combines the image data from the image data generator 6031 and the pixel-unit α data to produce synthetic image data Vd of 24 bits per pixel.

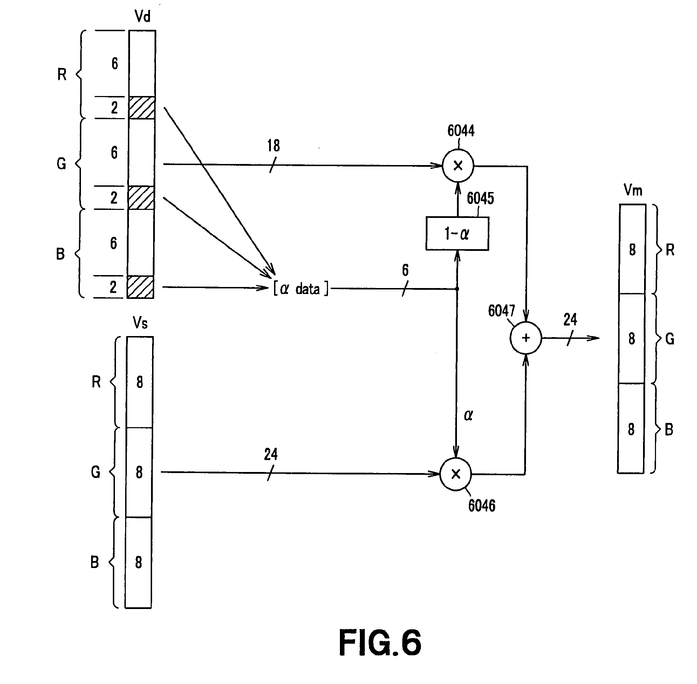

In this case, the bit synthesizer 6033 divides the α data of 6 bits into three pieces each of 2 bits, adds the 2-bit subdivisional α data to each of the primary-color data each of 6 bits, as shown in FIG. 6, to produce the synthetic image data Vd which appears as if it were formed from pixel data including three primary-color data R, G and B each of 8 bits.

Note that the image data generator 6031 will not output image data formed from pixel data each of 18 bits including three primary-color data each of 6 bits, but add dummy data each of 2 bits to each of the three primary-color data each of 6 bits to output image data of 24 bits in total formed from pixel data including three primary-color data each of 8 bits. In this case, the bit synthesizer 6032 replaces the 2-bit dummy bit with the subdivisional α data of 2 bits.

As above, the image data Vd from the display image data generation/output unit 603 is written to the image data buffer memory 6041 in the video mixer 604.

On the other hand, image data Vs from the selection circuit 706 in the TV broadcast receiver 70 is written to the image data buffer memory 6042. In this example, the image data Vs from the selection circuit 706 includes pixel data of 24 bits formed from three primary-color data each of 8 bits as shown in FIG. 5.

In the video mixer 604, pixel data in positions in the image data buffer memories 6041 and 6042, corresponding to each other, are read synchronously with each other, and both the pixel data are mixed with the alpha (α) blending technique before being outputted as will be described below.

That is, the pixel data read from the image data buffer memory 6041 is supplied to an α data separator 6043. Also, the pixel data read from the image data buffer memory 6042 is supplied to a (1 - α) multiplication unit 6046.

The α data separator 6043 separates the primary-color data each of 8 bits into a pixel data part of 6 bits and subdivisional α data part of 2 bits.

The α data separator 6043 supplies three primary-color data (of 18 bits) in the separated pixel data part to a multiplication unit 6044. The α data separator 6043 supplies the α data formed from all the separated 2-bit subdivisional α data (6 bits) to the multiplication unit 6044 via the (1 - α) multiplication unit 6046 and also as it is to the (1 - α) multiplication unit 6046.

Multiplication output data from the multiplication units 6044 and 6046 are supplied to a mixer 6047. Therefore, the mixer 6047 will have made a calculation of Vd × (α - 1) + Vs × α. The mixer 6047 provides output data Vm including pixel data of 24 bits formed from three primary-color data each of 8 bits as shown in FIG. 6.

The mixed image data from the mixer 6047 is supplied to the monitor display 30 via the display signal conversion output unit 609. Thus, on the display screen of the monitor display 30, there is displayed a graphical user interface screen image formed from image data Vm being superposed in a translucent state on an image formed from the image data Vs.

At this time, since the graphical user interface image can have the transparency thereof controlled pixel by pixel, so it can easily be superposed on the image as having previously been described with reference to FIG. 4. It should be noted that the graphical user interface screen image is not transparent when α = 1 and completely transparent when α = 0.

Since the α data is transmitted as a part of the pixel data according to this embodiment, so the conventional memory dedicated to the α data is not required.

### [ Second embodiment of the image mixing method ]

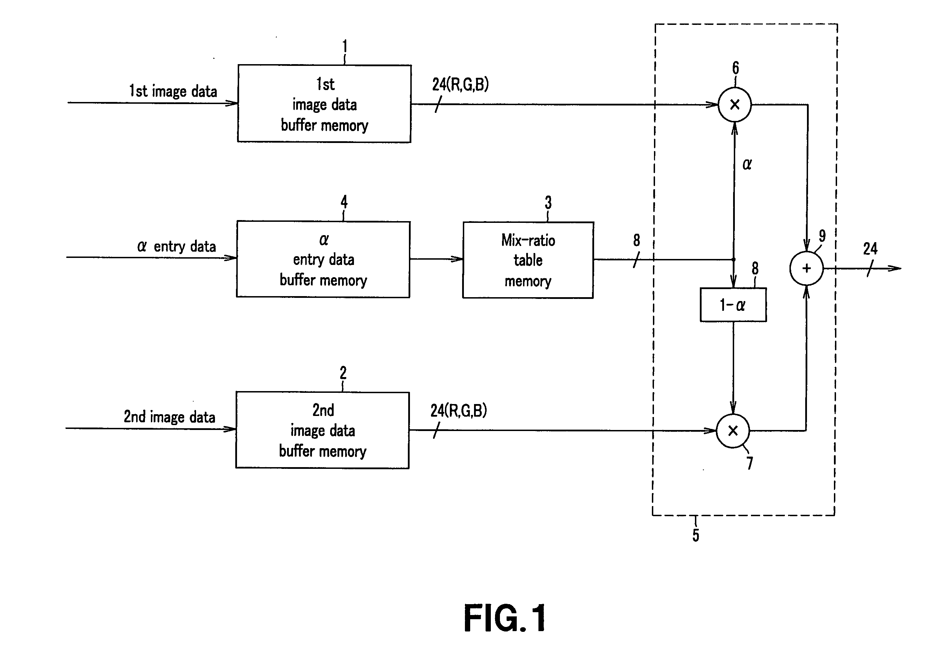

In the aforementioned first embodiment, each of the pixel data of one of data to be mixed together has data mixed at the ratio α embedded therein. According to the second embodiment, a mixing-ratio table memory to store data mixed at the ratio α is used as in the conventional method having previously been described with reference to FIG. 1. In this second embodiment, the α entry data for reading data mixed at the ratio α from the mixing-ratio table memory is embedded in each of the pixel data in one of the images to be mixed together.

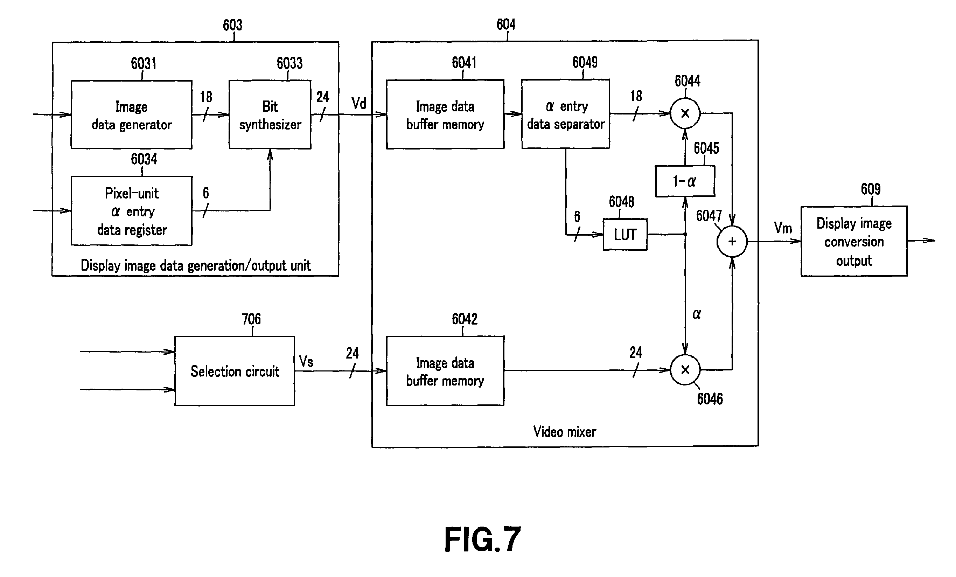

FIG. 7 is a functional block diagram illustrating, as blocks, functional units which combine image data on the graphical user interface in the display image data generation/output unit 603 and video mixer 604 in the video game machine 60 and image data from the TV broadcast recorder 70. Namely, the second embodiment corresponds to the first embodiment shown in FIG. 2. It should be noted that in FIG. 7, the same components as those shown in FIG. 2 will be indicated with the same references as used in FIG. 2.

According to the second embodiment, a mixing-ratio table memory 6048 is provided in the video mixer 604 as shown in FIG. 7. The mixing-ratio table memory 6048 has stored therein 2⁶ = 64 data mixed at the ratio α. In this example, each of the data mixed at the ratio α is 8 bits, for example.

According to the second embodiment, to generate image data on a graphical user interface, the image data generator 6031 and bit synthesizer 6033 are provided in the display image data generation/output unit 603 as in the first embodiment. In this second embodiment, a pixel-unit α entry data register 6034 is used in place of the pixel-unit α data register 6032 in the first embodiment.

Also, the video mixer 604 has an α entry data separator 6049 in place of the α data separator 6043 in the first embodiment in addition to aforementioned mixing-ratio table memory 6048. The video mixer 604 and others are constructed as in the first embodiment.

According to the second embodiment, for image data such as the graphical user interface screen image data to be processed for translucent appearance, the image data generator 6031 outputs pixel data each of 18 bits in total including three primary-color data each of 6 bits, such as red, green and blue, in this example.

The display image data generation/output unit 603 receives 6-bit α entry data, in this example, as data from the drawing engine 602 and stores it into the pixel-unit α entry data register 6034. As mentioned above, the α entry data is used to read corresponding α data from the α data stored in the mixing-ratio table memory 6048.

Then, image data from the image data generator 6031 and α entry data from the pixel-unit α entry data register 6034 are supplied to the bit synthesizer 6033. The bit synthesizer 6033 combines the image data from the image data generator 6031 and pixel-unit α entry data to produce synthetic image data Vd of 24 bits per pixel.

In this case, the bit synthesizer 6033 divides the 6-bit α entry data into three pieces each of 2 bits, and adds the 2-bit subdivisional α entry data to each of the primary-color data each of 6 bits to generate synthetic image data Vd which appears as if it were formed from pixel data including three primary-color data R, G and Beach of 8 bits.

Note that even in the second embodiment, the image data generator 6031 may not output image data including pixel data each of 18 bits formed from three primary-color data each of 6 bits but it may output image data formed from pixel data each of 24 bits including three primary-color data each of 8 bits and dummy data each of 2 bits added to each of the three primary-color data. In this case, the bit synthesizer 6033 will replace the 2-bit dummy data with the 2-bit subdivisional α entry data.

As above, the image data Vd from the display image data generation/output unit 603 is written o the image data buffer memory 6041 in the video mixer 604.

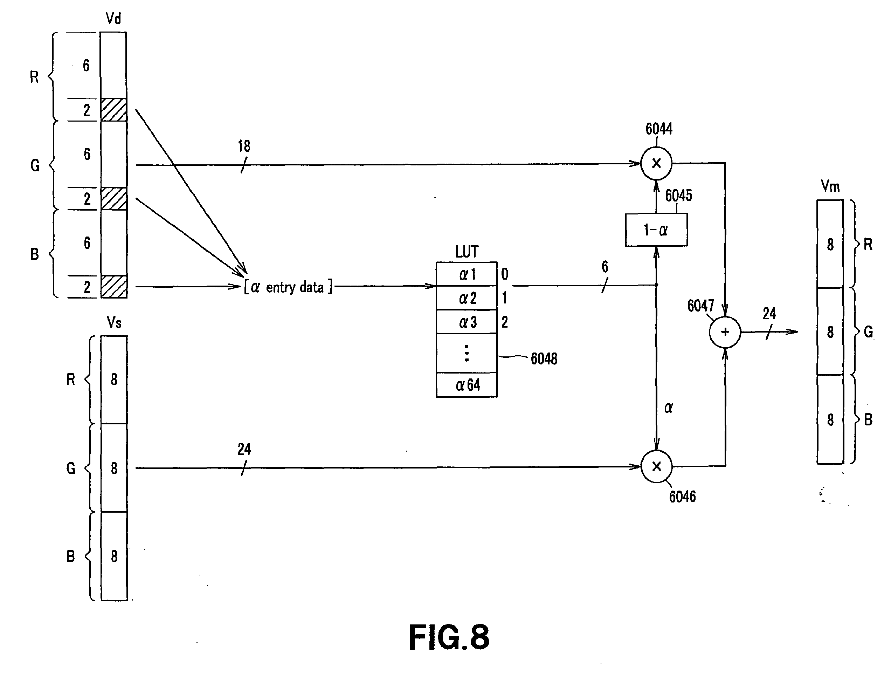

On the other hand, the image data Vs from a selection circuit 706 in the TV broadcast receiver 70 is written to the image data buffer memory 6042. In this example, the image data Vs from the selection circuit 706 is of 24 bits including pixel data formed from three primary-color data each of 8 bits as shown in FIG. 8.

In the video mixer 604, pixel data in positions in the image data buffer memories 6041 and 6042, corresponding to each other, are read synchronously with each other, and both the pixel data are processed with the α blending technique and then outputted.

Namely, the pixel data read from the image data buffer memory 6041 is supplied to the α entry data separator 6049, and pixel data read from the image data buffer memory 6042 is supplied to the multiplication unit 6046.

The α entry data separator 6049 separates primary-color data each of 8 bits into a pixel data part of 6 bits and a subdivisional α entry data part of 2 bits.

Then, an α entry data separator 6141 supplies the separated three primary-color data (18-bit data) in the separated pixel data part to the multiplication unit 6044. The α data separator 6043 supplies the α entry data (of 6 bits) formed from all the separated subdivisional α entry data each of 2 bits as read address data to the mixing-ratio table memory 6048. Thus, α data corresponding to the α entry data is read from the mixing-ratio table memory 6048.

The α data read from the mixing-ratio table memory 6048 is supplied to the multiplication unit 6044 via the (1 - α) multiplication unit 6046, and as it is to the multiplication unit 6046.

The multiplication output data from the multiplication units 6044 and 6046 are supplied to the mixer 6047. Therefore, the mixer 6047 will have made a calculation of Vd × (α - 1) + Vs × α. The mixer 6047 provides output data Vm including pixel data of 24 bits formed from three primary-color data each of 8 bits as shown in FIG. 8.

The mixed image data from the mixer 6047 is supplied to the monitor display 30 via the display signal conversion output unit 609. Thus, on the display screen of the monitor display 30, there is displayed a graphical user interface screen image formed from image data Vm being superposed in a translucent state on an image formed from the image data Vs.

At this time, since the graphical user interface image can have the transparency thereof controlled pixel by pixel, so it can easily be superposed on the image as having previously been described with reference to FIG. 4.

Note that although in the image mixing methods according to the first and second embodiments of the present invention, one of the images mixed with the α blending technique is reduced in number of display colors for the bits at which the α data or α entry data is embedded, the reduced number of display colors will not have so large an influence in the above embodiments because the image to be superposed in a translucent state is a graphical user interface image or thumbnail.

Note that although the α data or α entry data is of 6 bits and 2 bits of the data is embedded in each of the three primary-color data in the aforementioned first and second embodiments, the number of bits of the α data or α entry data and method of embedding are not limited to the above-mentioned ones.

For example, the α data or α entry data may be of 3 bits and one bit of the data be embedded in each of the three primary-color data. Also, the α data or α entry data may of course be of more than 6 bits.

Also, in the aforementioned embodiments, the image data are formed from three primary-color data but they may be a combination of a brightness signal Y and color-difference signals R-Y and B-Y or a combination of brightness signal Y and color signal C, as the image data format. In case the image data takes the combination of brightness signal Y and color signal C as the image data format, the α data or α entry data is divided by two pieces, and the pieces are embedded into the brightness Y and color signal C, respectively.

In case the image data takes the combination of brightness signal Y and color-difference signals R-Y and B-Y or the combination of brightness signal Y and color signal C as the image data format, the α data or α entry data is not equally divided but different numbers of bits may be embedded in the brightness signal Y and color-difference signals R-Y and B-Y or color signal C, respectively.

In the foregoing, the present invention has been described in detail concerning a certain preferred embodiment thereof as an example with reference to the accompanying drawings. However, it should be understood by those ordinarily skilled in the art that the present invention is not limited to the embodiment but can be modified in various manners, constructed alternatively or embodied in various other forms without departing from the scope thereof as set forth and defined in the appended claims.

For example, although the embodiments of the present invention have been described concerning the superposed display of two images, the present techniques may be applied to superposed display of more than three images.

Also, the embodiments of the present invention have been described concerning the application of the present invention to the multimedia recorder/player having the function of a video game machine, function of receiving and recording a TV broadcast, function of write to, and read from, a DVD and similar functions. However, the present invention is not limited in application to such a multimedia recorder/player but it is application to all kinds of superposed display of a plurality of images with one of the images being superposed in a translucent state on another or the other images.

## Claims

1. An image mixing method of mixing first digital image data and second digital image data at a ratio defined in units of a pixel by mixing-ratio. information, the method comprising the steps of:
embedding, in each of pixel data formed from a plurality of bits in the first digital image data, the mixing-ratio information as information of more than one bit in the pixel data;
separating the mixing-ratio information from the first digital image data; and
mixing the first and second digital image data at a ratio defined by the separated mixing-ratio information.

2. The method according to claim 1, wherein:
the first digital image data are three primary-color data; and
in the step of embedding the mixing-ratio information, the mixing-ratio information is equally allocated to each of the three primary-color data.

3. A method of mixing first and second digital image data at a ratio defined in units of a pixel by mixing-ratio information read from a mixing-ratio table memory having a plurality of mixing-ratio information stored therein, the method comprising the steps of:
embedding, in each of pixel data formed from a plurality of bits in the first digital image data, mixing-ratio selection data for selectively reading the mixing-ratio information from the mixing-ratio table memory as information of more than one bit in the pixel data;
separating the mixing-ratio selection data from the first digital image data;
reading the mixing-ratio information from the mixing-ratio table memory on the basis of the separated mixing-ratio information and in units of a pixel; and
mixing the first and second digital image data at the ratio defined by the read mixing-ratio information.

4. The method according to claim 3, wherein:
the first digital image data are three primary-color data; and
in the step of embedding the mixing-ratio information, the mixing-ratio information is equally allocated to each of the three primary-color data.

5. A mixed image data generation device for mixing first digital image data and second digital image data at a ratio defined in units of a pixel by mixing-ratio information to generate a display image data, the device comprising:
a separating means for separating the mixing-ratio information embedded, in each of pixel data formed from a plurality of bits in the first digital image data, as information of more than one bit in the pixel data; and
a mixing means for mixing the first and second digital image data at a ratio defined by the mixing-ratio information separated by the separating means.

6. The device according to claim 5, wherein:
the first digital image data are three primary-color data; and
in the step of embedding the mixing-ratio information, the mixing-ratio information is equally allocated to each of the three primary-color data.

7. A mixed image data generation device for mixing first and second digital image data at a ratio defined in units of a pixel by mixing-ratio information to generate display image data, the device comprising:
a mixing-ratio table memory having a plurality of the mixing-ratio information stored therein;
a separating means for separating mixing-ratio selection data for selectively reading the mixing-ratio information from the mixing-ratio table memory, embedded as information of more than one bit in the pixel data, in each of pixel data formed from a plurality of bits in the first digital image data;
a means for reading the mixing-ratio information from the mixing-ratio table memory on the basis of the mixing-ratio information separated by the separating means and in units of a pixel; and
a mixing means for mixing the first and second digital image data at the ratio defined by the read mixing-ratio information.

8. The device according to claim 7, wherein:
the first digital image data are three primary-color data; and
in the step of embedding the mixing-ratio information, the mixing-ratio information is equally allocated to each of the three primary-color data.

9. A mixed image data generation device for mixing first digital image data and second digital image data at a ratio defined in units of a pixel by mixing-ratio information to generate a display image data, the device comprising:
a separator for separating the mixing-ratio information embedded, in each of pixel data formed from a plurality of bits in the first digital image data, as information of more than one bit in the pixel data; and
a mixer for mixing the first and second digital image data at a ratio defined by the mixing-ratio information separated by the separator.

10. A mixed image data generation device for mixing first and second digital image data at a ratio defined in units of a pixel by mixing-ratio information to generate display image data, the device comprising:
a mixing-ratio table memory having a plurality of the mixing-ratio information stored therein;
a separator for separating mixing-ratio selection data for selectively reading the mixing-ratio information from the mixing-ratio table memory, embedded as information of more than one bit in the pixel data, in each of pixel data formed from a plurality of bits in the first digital image data;
a unit for reading the mixing-ratio information from the mixing-ratio table memory on the basis of the mixing-ratio information separated by the separator and in units of a pixel; and
a mixer for mixing the first and second digital image data at the ratio defined by the read mixing-ratio information.
